# FASCICULE DE BREVET EUROPEEN

(11) **EP 4 107 371 B1**
(45) Date de publication et mention de la délivrance du brevet: **20.11.2024**
(21) Numéro de dépôt: 21707356.8
(22) Date de dépôt: 07.02.2021
(51) Int. Cl.: F01D 25/16, F02C 7/06, F01D 25/18, F16C 33/66

(54) **DISPOSITIF DE DISTRIBUTION D'HUILE D'UN PALIER A ROULEMENT DE TURBOMACHINE D'AERONEF**
VORRICHTUNG ZUR VERTEILUNG VON ÖL AUS EINEM WÄLZLAGER FÜR EIN FLUGZEUGTURBINENTRIEBWERK
DEVICE FOR DISTRIBUTING OIL FROM A ROLLING BEARING FOR AN AIRCRAFT TURBINE ENGINE

(30) Priorité: 17.02.2020 FR 2001554
(43) Date de publication de la demande: 28.12.2022
(73) Titulaire: SAFRAN AIRCRAFT ENGINES, 75015 Paris (FR)
(72) Inventeur: PERDRIGEON, Christophe Marcel Lucien, 77550 MOISSY-CRAMAYEL (FR); SERVANT, Régis Eugène Henri, 77550 MOISSY-CRAMAYEL (FR); BAZIN, Guillaume François Jean, 77550 MOISSY-CRAMAYEL (FR)
(74) Mandataire: Gevers & Orès
(86) Numéro de dépôt international: PCT/FR2021/050223
(87) Numéro de publication internationale: WO 2021/165598

(56) Documents cités:
- EP-A1- 3 112 636
- US-B2- 10 082 037

## Description

### Domaine technique de l'invention

La présente invention concerne un dispositif de distribution d'huile d'un palier à roulement pour une turbomachine d'aéronef.

### Aval-plan technique

L'état de l'art comprend notamment les documents FR-A1-3 035 154, FR-A1-3 066 549, WO-A1-2015/075355, US-B2-10 082 037 et EP-A1-3 112 636.

De façon connue, une turbomachine comprend un certain nombre de paliers à roulement qui sont destinés à supporter en rotation le rotor de la turbomachine, notamment par rapport à un support fixe tel que le carter de celle-ci.

En fonctionnement, de l'huile est typiquement injectée sur les roulements de ces paliers de façon à les lubrifier et à les refroidir. Pour éviter que de l'huile ne se répande dans tout le moteur, il est nécessaire de confiner les paliers à roulement à l'intérieur d'enceintes à huile et d'assurer une étanchéité de ces enceintes à huile par rapport à des enceintes à air voisines du moteur qui doivent être exemptes d'huile.

Plus précisément, certaines enceintes à huile sont délimitées entre l'arbre supporté en rotation par le palier à roulement et un couvercle annulaire solidaire d'un support fixe lié au carter de turbomachine et disposé autour de l'arbre. Un joint annulaire dynamique est généralement positionné entre l'arbre et le couvercle pour assurer une étanchéité entre l'enceinte à huile et une enceinte à air voisine de cette dernière. Typiquement, le joint dynamique est monté à l'intérieur d'un flasque lui-même fixé sur le couvercle.

Les joints dynamiques typiquement utilisés dans les enceintes à huile de palier à roulement pour turbomachine sont des joints radiaux segmentés (JRS), comportant une pluralité de segments d'anneau répartis circonférentiellement autour d'une piste de joint tournant avec l'arbre du rotor. Ces segments sont en contact glissant avec la piste de joint. Les frottements entre les segments du joint et la piste de joint génèrent de la chaleur qu'il est nécessaire d'évacuer afin de conserver l'intégrité mécanique de ces éléments. Pour ce faire, une technique consiste à faire circuler de l'huile de refroidissement le long de la paroi interne de la piste de joint.

Le joint dynamique peut être situé juste à côté d'un palier à roulement qui est lubrifié par de l'huile en fonctionnement. Il est connu de lubrifier un palier à roulement par l'intermédiaire d'une bague de distribution d'huile. Le palier à roulement est monté sur la bague de distribution d'huile qui comprend une écope de récupération d'huile projetée par un gicleur, afin de récolter cette huile et alimenter un circuit de lubrification du palier.

La présente invention propose un perfectionnement à cette technologie qui permet notamment d'optimiser le refroidissement de la piste d'un joint dynamique, par exemple du type JRS, disposé à côté d'un palier à roulement lubrifié.

### Résumé de l'invention

L'invention concerne un dispositif de distribution d'huile d'un palier à roulement pour une turbomachine d'aéronef, comportant :
- un palier à roulement comportant deux bagues, respectivement interne et externe,
- un corps de distribution d'huile configurée pour être montée sur un arbre de turbomachine, ce corps comportant :
   i) une première surface cylindrique externe de montage de la bague interne du palier,
   ii) une écope annulaire de récupération d'huile,
   iii) une piste annulaire d'un joint dynamique,
   iv) un circuit de lubrification dudit palier et de refroidissement de la piste, ce circuit étant formé dans le corps,
caractérisé en ce que l'écope annulaire constitue la première écope qui alimente une première partie dudit circuit en vue du refroidissement de la piste, et en ce que le corps comprend une seconde écope annulaire de récupération d'huile qui alimente une seconde partie dudit circuit en vue de la lubrification du palier.

L'invention permet d'une part de réduire le nombre de pièces et donc la conception du dispositif puisque son corps intègre plusieurs fonctions à savoir celle de la bague de distribution qui supporte et lubrifie le palier, ainsi que celle de la piste du joint dynamique. Le dispositif peut ainsi avoir un encombrement, en particulier radial et axial, réduit par rapport à la technique antérieure. L'invention permet également de simplifier le circuit d'huile qui sert à la fois à la lubrification du palier et au refroidissement de la piste de joint. En effet, la circulation d'huile à proximité de cette piste permet de la refroidir par conduction thermique, ce qui est particulièrement avantageux. Le passage d'huile dans le circuit ne nécessite donc pas forcément de système d'étanchéité particulier, ce qui limite également le risque de fuite d'huile incontrôlée en fonctionnement. Par ailleurs, la réduction du diamètre de la piste entraîne la diminution de la section de fuite à étancher par le joint dynamique, ce qui améliore encore l'efficacité du dispositif d'étanchéité. L'inconvénient d'utiliser une seule écope pour alimenter le circuit et à la fois la lubrification du palier et le refroidissement de la piste de joint, est un risque de sous-alimentation de la piste de joint et donc un mauvais refroidissement de cette dernière.

Les deux écopes permettent d'alimenter séparément les deux parties du circuit, et donc de générer un premier flux d'huile pour le refroidissement de la piste de joint et un second flux d'huile pour la lubrification du palier.

Le rôle des deux écopes est donc d'alimenter convenablement les parties du circuit tout en augmentant le moins possible l'encombrement de la pièce. La piste de joint est refroidie par un flux d'huile dédié ce qui garantit ce refroidissement.

Le dispositif selon l'invention peut comprendre une ou plusieurs des caractéristiques suivantes, prises isolément les unes des autres, ou en combinaison les unes avec les autres :
- la première écope a un diamètre inférieur à celui de la seconde écope ;
- les écopes ont en section axiale une forme générale en L et comprennent chacune une partie cylindrique dont une extrémité est reliée à un rebord annulaire, les parties cylindriques s'étendant l'une autour de l'autre et les rebords annulaires étant décalés axialement l'un par rapport à l'autre ;
- la première partie du circuit comprend au moins un premier canal s'étendant dans le corps entre la première écope et ladite piste ;
- la seconde partie du circuit comprend au moins un second canal s'étendant dans le corps entre la seconde écope et des conduits d'alimentation en huile du palier ;
- la première partie comprend un second canal de forme annulaire et dans lequel sont situées des nervures longitudinales, et la seconde partie comprend des premiers canaux longitudinaux indépendants et espacés autour d'un axe longitudinal du corps ;
- les écopes sont formées d'une seule pièce avec le corps et sa piste ;
- la première écope est formée d'une seule pièce avec ladite piste, la seconde écope étant portée par un écrou vissé sur la première écope et prenant de préférence appui sur la bague interne du palier ;
- ledit corps comprend :
   - des dents de crabot configurées pour coopérer par engagement avec des dents de crabot complémentaires dudit arbre, et/ou
   - une butée annulaire d'appui configurée pour coopérer par appui axial avec un épaulement cylindrique correspondant dudit arbre.
      -- ledit corps comporte une seconde surface cylindrique externe de support du joint,
      -- ledit corps comprend un épaulement annulaire d'appui d'une première extrémité axiale de la bague interne, ledit corps comportant en outre un filetage de vissage d'un écrou configuré pour prendre appui sur une seconde extrémité axiale opposée de la bague interne,
      -- ledit filetage est situé entre lesdites première et seconde surfaces,
      -- ladite écope est située à une première extrémité axiale dudit corps, et ladite piste (ou ladite seconde surface) est située à une seconde extrémité axiale opposée du corps.

L'invention concerne en outre une turbomachine, en particulier d'aéronef, comportant un au moins un dispositif tel que décrit ci-dessus.

La turbomachine selon l'invention peut comprendre une ou plusieurs des caractéristiques suivantes, prises isolément les unes des autres, ou en combinaison les unes avec les autres :
-- la turbomachine comprend un arbre autour duquel est monté le dispositif ainsi qu'un tourillon, le corps du dispositif étant serré axialement entre un épaulement annulaire de l'arbre et le tourillon qui est sollicité axialement en butée contre le corps par vissage d'un écrou sur l'arbre,
-- la turbomachine comprend un gicleur d'huile dans un espace annulaire délimité par ladite écope, et en particulier entre l'écope et ledit arbre,
-- le gicleur comprend deux sorties de projection d'huile dont une première est configurée pour alimenter la première écope et dont une seconde est configurée pour alimenter la seconde écope.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une demi vue schématique partielle en coupe axiale d'une turbomachine comportant un dispositif de distribution d'huile,
[Fig.2] la figure 2 est une vue schématique partielle en perspective et en coupe axiale du dispositif de la figure 1,
[Fig.3] la figure 3 est une demi vue schématique partielle en coupe axiale d'une turbomachine comportant un dispositif de distribution d'huile selon un mode de réalisation de l'invention,
[Fig.4] la figure 4 est une vue similaire à celle de la figure 3 et représentant le cheminement d'huile de lubrification et d'huile de refroidissement,
[Fig.5A-5B] les figures 5A et 5B sont des vues schématiques, respectivement en coupe axiale et en coupe transversale (selon la ligne V-V), d'un corps du dispositif de la figure 3, et
[Fig.6] la figure 6 est une demi vue schématique partielle en coupe axiale d'une turbomachine comportant un dispositif de distribution d'huile selon une variante de réalisation de l'invention.

### Description détaillée de l'invention

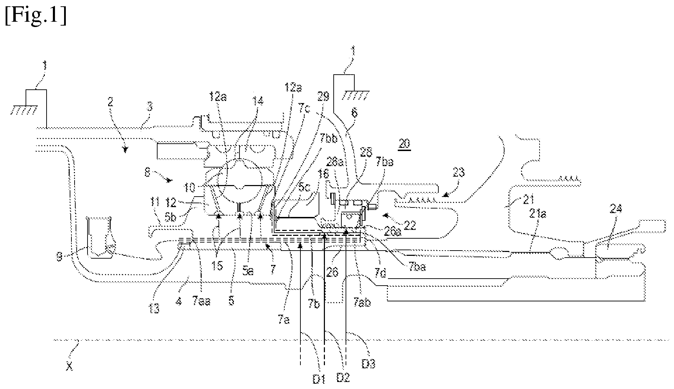

La figure 1 représente de façon schématique et partielle une enceinte à huile 2 d'un palier de turbomachine d'aéronef.

Cette enceinte à huile 2 est délimitée, du côté intérieur, par un arbre 4 tournant autour d'un axe X, et du côté extérieur par un couvercle annulaire 6 et un support de palier 3 qui sont solidaires d'un carter 1 de la turbomachine et qui est disposé autour de l'arbre 4.

Une bague 5 de distribution d'huile est disposée autour de l'arbre 4 coaxialement à celui-ci, et est solidaire en rotation de celui-ci.

L'enceinte à huile 2 renferme un palier 8 comprenant une pluralité d'éléments roulants 10 engagés entre une bague interne 12 montée sur la bague de distribution 5, de préférence par frettage, et une bague externe 14 solidaire du support de palier 3 fixé au carter 1 de la turbomachine. Le support de palier 3 peut avoir une certaine souplesse.

Dans l'exemple illustré sur les figures, les éléments roulants 10 sont des billes. Néanmoins, le type de roulement ou éléments roulants n'est pas limitatif dans le cadre de la présente invention.

De l'huile est injectée dans l'enceinte à huile 2 afin de lubrifier et de refroidir les éléments roulants 10 du palier. A cet effet, de l'huile circule dans un circuit de lubrification 7 intégré dans la bague de distribution 5 jusqu'à une surface cylindrique externe 5a de la bague de distribution 5 qui sert au montage de la bague interne 12.

L'huile est apportée par un gicleur d'huile 9 qui est ici situé à l'amont de la bague de distribution 5 (les expressions « amont » et « aval » font ici référence à l'écoulement général des gaz dans la turbomachine). La bague 5 a une forme générale annulaire autour de l'axe X et comprend à son extrémité amont une écope 11 de récupération de l'huile projetée par le gicleur 9. Cette écope se présente sous la forme d'un rebord cylindrique orienté vers l'amont dans l'exemple représenté. L'écope 11 s'étend autour et à distance de l'arbre 4 et définit avec celui-ci un espace annulaire de réception de l'huile du gicleur 9.

Le circuit d'huile 7 comprend au moins une entrée débouchant sur l'extrémité amont de la bague de distribution 5, dans l'espace précité de réception d'huile.

Dans l'exemple représenté, cette entrée est formée par une extrémité amont 7aa d'au moins un canal 7a qui a une forme allongée le long de l'axe X et qui comprend une extrémité aval 7ab située au niveau de l'extrémité aval de la bague de distribution 5.

Toujours à son extrémité amont, la bague 5 comprend une rangée annulaire de dents de crabot 13 qui sont orientées axialement vers l'amont et sont engagées entre des dents de crabot complémentaires de l'arbre 4. Cette coopération permet de solidariser en rotation la bague 5 sur l'arbre 4. Comme on le voit dans le dessin, l'extrémité 7aa est située radialement entre les dents de crabot 13 et l'écope 11.

Des conduits d'huile 15 orientés sensiblement radialement par rapport à l'axe X s'étendent depuis le canal 7a jusqu'à la surface 5a de la bague 5 en vue de la lubrification du palier 8.

La bague interne 12 du palier 8 comprend également un circuit intégré 12a d'huile en vue de la circulation de l'huile amenée par le circuit 7 de la bague 5, pour lubrifier les éléments roulants et leur cage. La bague interne 12 est en appui axial vers l'amont sur un épaulement annulaire 5b de la bague 5. En aval de la surface 5a de montage de la bague interne 12, la bague de distribution 5 comprend un filetage externe 5c de vissage d'un écrou 16 qui prend appui axialement sur l'extrémité aval de la bague 12 afin de la serrer axialement contre l'épaulement 5b.

L'enceinte à huile 2 comprend en outre un système d'étanchéité destiné à assurer une étanchéité de cette enceinte à huile par rapport à une enceinte à air 20 voisine qui doit être exempte d'huile.

A cet effet, le système d'étanchéité comprend notamment un joint annulaire dynamique 22. Typiquement, ce joint dynamique 22 est composé de segments d'anneau en carbone. Le joint dynamique 22 est maintenu dans un flasque annulaire 28 lui-même monté à l'intérieur du couvercle 6.

Le flasque 28 présente une partie 28a de section en forme de L qui reçoit le joint dynamique 22.

Le joint annulaire dynamique 22 est associé à une piste de joint 26, qui est tournante et portée par l'arbre 4. La piste 26 comporte une surface de contact 26a, en contact glissant avec le joint annulaire dynamique 22. La surface de contact 26a et la piste 26 sont traitées pour améliorer le glissement joint/piste et minimiser l'usure du joint annulaire dynamique 22.

Le système d'étanchéité comporte également un joint labyrinthe 23 disposé en aval du joint dynamique 22, entre un tourillon 21 monté sur l'arbre 4 et le couvercle 6.

Le tourillon 21 est solidarisé en rotation avec l'arbre 4 par l'intermédiaire de cannelures 21a. Le tourillon 21 est situé en aval de la bague de distribution 5 et comprend une extrémité amont en appui axial contre l'extrémité aval de la bague 5, cette extrémité aval formant une butée axiale. Un écrou 24 est vissé sur l'arbre 4, en aval du tourillon 21, afin de plaquer celui-ci axialement contre la bague 5 qui est elle-même maintenue serrée axialement contre les dents de crabot de l'arbre 4. Par ailleurs, la bague 5 est de préférence frettée sur l'arbre 4 pour garantir son centrage.

La bague de distribution 5 et la piste 26 du joint dynamique 22 sont formées d'une seule pièce, par exemple par fabrication additive. La bague 5 et la piste 26 sont ainsi formées par un corps monobloc qui intègre le circuit 7.

Comme cela est visible dans les dessins, le circuit 7 s'étend axialement vers l'aval jusqu'à la piste 26 en vue du refroidissement par conduction de la surface 26a.

Le canal 7a précité a ainsi son extrémité aval 7ab qui est située au plus proche de l'extrémité aval de la piste 26 et du corps, et qui est entourée par la surface 26a. Dans l'exemple représenté, le canal 7 est rectiligne et situé sur une circonférence centrée sur l'axe X ayant un diamètre D1. La surface 26a est située sur une circonférence centrée sur cet axe X de diamètre D3. Le circuit 7 comprend au moins un autre canal 7b qui a une forme générale allongée et de préférence rectiligne et qui est situé sur une circonférence centrée sur l'axe X de diamètre D2. D1 est inférieur à D2 qui est inférieur à D3, ce qui signifie que le canal 7b s'étend entre le canal 7a et la surface 26a. Le canal 7b a une extrémité aval 7ba reliée à l'extrémité aval 7ab du canal 7a et une extrémité amont 7bb qui débouche sur la surface 5a, ou dans le filetage 5c, ou entre la surface 5a et le filetage 5c, comme dans l'exemple représenté. Cette extrémité 7bb peut être coudée en L et comprendre une partie orientée radialement vers l'extérieur et débouchant par exemple dans une gorge annulaire 7c prévue sur la bague 5, qui débouche radialement vers l'extérieur.

La liaison des extrémités 7ab et 7ba peut être réalisée par au moins un conduit 7d coudé en C par exemple.

L'écrou 16 peut comprendre au moins un canal 29 intégré de circulation d'huile, qui est destiné à recevoir de l'huile provenant de la gorge 7c. Ce canal 29 est par exemple incliné de l'amont vers l'aval radialement vers l'extérieur et comprend une extrémité radialement interne débouchant en regard de la gorge 7c, et une extrémité radialement externe débouchant vers l'extérieur en vue de la projection d'huile vers l'extérieur. Ceci permet de conférer à l'écrou 16 une fonction de lance goutte par centrifugation, qui permet de projeter l'huile ayant servi à la lubrification du palier 8 et/ou au refroidissement du joint 22, à distance de ce joint. La présence d'huile sur le joint 22 risquerait en effet de réduire son efficacité.

L'intégration du circuit de refroidissement à la piste de joint 26 permet d'en réduire le diamètre, ce qui a un double avantage. Tout d'abord, cela diminue l'encombrement radial dans cette zone. Par ailleurs, les frottements du joint 22 sur la piste 26 sont moins importants de part des vitesses périphériques plus faibles. Enfin, la section de passage entre le joint 22 et la piste 26 est plus faible et donc les fuites y sont aussi plus faibles.

La figure 1 représente de manière schématique par des flèches le cheminement de l'huile en fonctionnement. L'huile est projetée par le gicleur 9 dans l'espace délimité par l'écope 11 et pénètre dans le circuit 7. De l'huile est acheminée jusqu'au palier 8 en vue de sa lubrification, et jusqu'au voisinage de la surface 26a en vue de son refroidissement par conduction. L'huile de lubrification est centrifugée naturellement par le palier 8, et l'huile de refroidissement de la piste 26 est acheminée jusqu'à la gorge 7c où elle est ensuite évacuée à travers le canal 29 de l'écrou 16.

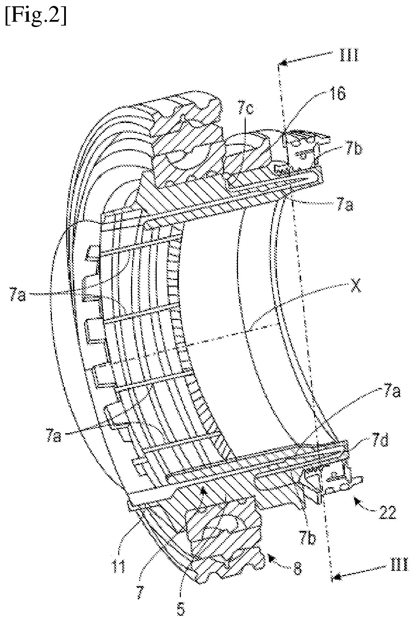

La figure 2 permet de constater que le circuit 7 peut comprendre plusieurs canaux 7a, 7b régulièrement espacés autour de l'axe X. Le corps peut comprendre jusqu'à dix canaux 7a voire plus. Ces canaux 7a peuvent en section avoir une forme circulaire. Leur section peut par ailleurs changer le long de l'axe X. Ils peuvent avoir chacun une section circulaire sur une portion amont et une section rectangulaire sur une portion aval.

Le corps peut également comprendre jusqu'à dix canaux 7b voire plus. Ces canaux 7b peuvent en section avoir une forme circulaire. Leur section peut par ailleurs changer le long de l'axe X. Ils peuvent avoir chacun une section circulaire sur une portion amont et une section rectangulaire sur une portion aval.

Les canaux 7a, 7b s'étendent ici parallèlement à l'axe X bien que ceci ne soit pas limitatif.

La Demanderesse a constaté que l'alimentation du circuit par une seule et même écope peut entraîner un problème de refroidissement insuffisant de la piste 26. En effet, les éléments roulants 10 du palier 8 créent un phénomène de pompage lors de leur passage sur les débouchés des conduits 15 acheminant l'huile. Le palier 8 consomme entre 80% et 90% du débit d'huile apporté par le circuit 7 contre seulement 20% à 10% pour la piste 26. Il est difficile de maîtriser avec précision ces proportions et il existe donc un risque de sous-alimentation en huile de la piste 26.

Afin d'assurer le bon débit d'huile de refroidissement de la piste 26 et de lubrification du palier 8, dans chacun des circuits tout en restant le plus compact possible, la solution proposée consiste à utiliser deux écopes distinctes qui sont chacune dédiée à l'alimentation d'une partie du circuit.

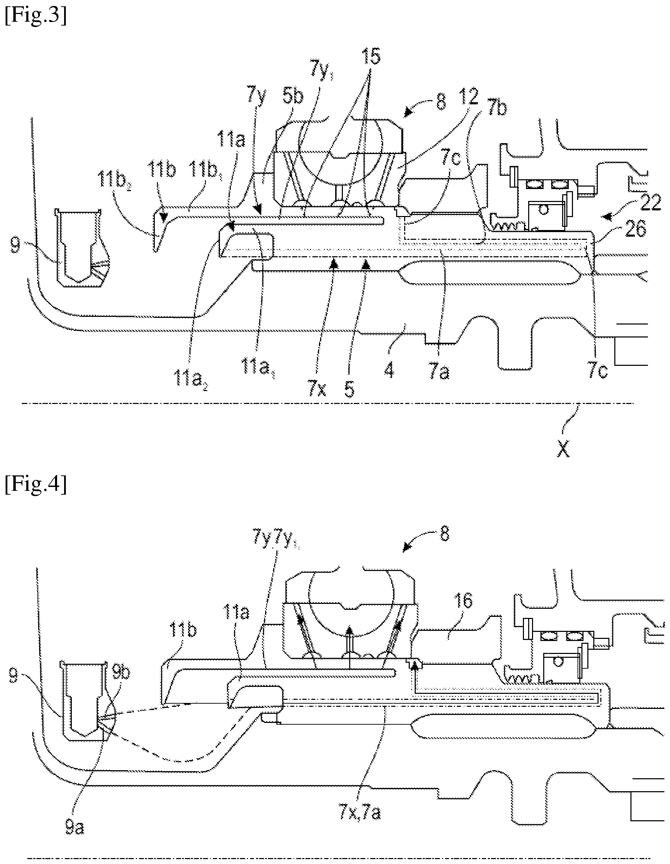

Les figures 3 à 5 illustrent un premier mode de réalisation d'un dispositif selon l'invention. Ce dispositif comprend toutes les caractéristiques du dispositif décrit dans ce qui précède sauf si elles sont en contradiction avec ce qui suit et les dessins.

Le dispositif comprend une première écope annulaire 11a, similaire à l'écope 11 du dispositif des figures 1 et 2, et qui alimente une première partie dudit circuit 7 en vue du refroidissement de la piste 26.

Le corps 5 du dispositif comprend en outre une seconde écope annulaire 11b de récupération d'huile qui alimente une seconde partie dudit circuit en vue de la lubrification du palier.

Dans l'exemple représenté, la première écope 11a a un diamètre inférieur à celui de la seconde écope 11b.

Les écopes 11a, 11b ont en section axiale une forme générale en L et comprennent chacune une partie cylindrique 11a1, 11b1 dont une extrémité axiale est reliée à un rebord annulaire 11 a2, 11b2. Les parties cylindriques 11a1, 11b1 s'étendent l'une autour de l'autre et les rebords annulaires 11a2, 11b2 sont décalés axialement l'un par rapport à l'autre. Le rebord 11b2 est ici situé en amont du rebord 11a2.

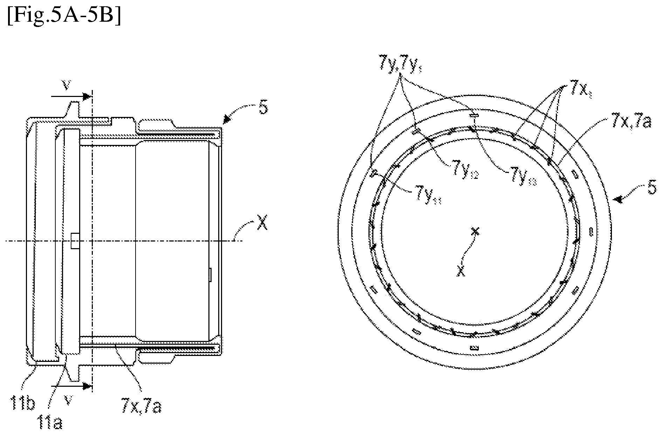

Les rebords 11a2, 11b2 ont des dimensions radiales prédéterminées de façon à garantir la retenue de l'huile projetée par le gicleur 9 en fonctionnement et éviter ainsi tout débordement de cette huile (cf. figure 4). La première partie 7x du circuit 7 comprend au moins un premier canal 7a s'étendant dans le corps 5 entre la première écope 11a et la piste 26. Les figures 5A et 5B permettent de constater que ce canal a une forme annulaire. Des nervures longitudinales 7x1 sont situées dans le canal 7a et s'étendent sur tout ou partie de sa longueur pour faciliter l'acheminement de l'huile tout en limitant les pertes de charge. Par ailleurs, du fait de la longueur relativement importante du canal 7, les nervures 7x1 assurent la liaison entre les portions annulaires radialement interne et externe du corps 5 séparées par ce canal 7. L'extrémité aval du canal 7a peut être reliée à d'autres éléments (7b, 7c, 7d) similaires à ceux des figures 1 et 2.

La seconde partie 7y du circuit 7 comprend au moins un second canal 7y1 s'étendant dans le corps 5 entre la seconde écope 11b et des conduits 15 d'alimentation en huile du palier. Les figures 5A et 5B illustrent un mode de réalisation préféré dans lequel la seconde partie 7y comprend plusieurs canaux longitudinaux 7y1 indépendants et espacés autour de l'axe longitudinal X du corps 5. Dans l'exemple représenté, il y a trois séries de trois canaux 7y1. Dans chacune de ces séries, un premier canal 7y11 est relié à un conduit 15 d'alimentation d'une portion amont de la bague, un deuxième canal 7y12 est relié à un autre conduit 15 d'alimentation d'une portion médiane de la bague 12, et un troisième canal 7y13 est relié à encore un autre conduit 15 d'alimentation d'une portion aval de la bague.

La figure 4 illustre le cheminement de l'huile depuis le gicleur 9. Ce gicleur 9 comprend avantageusement une première sortie 9a de projection d'huile, orientée par exemple radialement vers l'intérieur, et configurée pour alimenter en huile la première écope 11a. Cette huile chemine alors dans le premier canal 7a en vue du refroidissement de la piste 26, et jusqu'à déboucher au niveau de l'écrou 16 similaire à celui des figures 1 et 2.

Le gicleur 9 comprend une seconde sortie 9b de projection d'huile, orientée par exemple radialement vers l'extérieur, et configurée pour alimenter en huile la seconde écope 11b. Cette huile chemine alors dans les canaux 7y1 afin de lubrifier le palier 8.

Dans le mode de réalisation des figures 3 à 5B, les écopes 11a, 11b sont formées d'une seule pièce avec le corps 5 et sa piste 26.

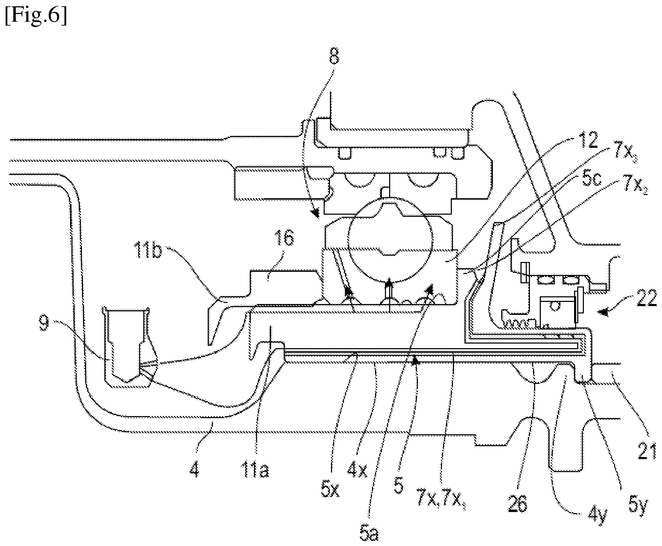

Dans la variante représentée à la figure 6, la première écope 11a est formée d'une seule pièce avec la piste 26 alors que la seconde écope 11b est portée par un écrou 16' vissé sur la première écope 11a.

Contrairement au précédent mode de réalisation et au dispositif des figures 1 et 2, la bague interne 12 du palier 8 n'est pas ici en appui sur un épaulement amont 5b du corps mais sur un épaulement aval 5c de ce corps. L'écrou 16' d'immobilisation de la bague interne 12 n'est donc pas vissé sur un filetage aval du corps 5 mais sur un filetage amont de ce corps. Cet écrou 16' est vissé depuis l'amont sur ce filetage, qui est disposé en amont de la surface 5a, et prend appui axialement sur une extrémité amont de la bague 12 qui est donc serrée axialement entre cet écrou 16' et l'épaulement 5c.

La seconde écope 11b est intégrée à cet écrou 6' et est en saillie à l'extrémité amont de cet écrou.

La première partie 7x du circuit 7 dédiée au refroidissement de la piste 26 débouche ici dans une rainure annulaire 7x2 formée dans l'épaulement 5b, juste en amont d'un voile annulaire 7x3 d'écoulement d'huile par effet centrifuge. Ce voile 7x3 est également intégré au corps 5.

Par ailleurs, dans cette variante de réalisation, le corps 5 est fretté par sa surface cylindrique interne 5x sur la surface cylindrique externe 4x de l'arbre, de façon à immobiliser en rotation le corps 5 vis-à-vis de l'arbre 4. L'arrêt axial du corps 5 sur l'arbre 4 est réalisé par une butée annulaire 5y portée par le corps 5, ici à son extrémité aval, et serrée axialement entre un épaulement cylindrique 4y de l'arbre 4 et l'extrémité amont d'un tourillon 21 similaire à celui de la figure 1.

Dans le mode de réalisation des figures 3 à 5B, le frettage entre le corps 5 et l'arbre 4 se situe juste à l'intérieur du palier 8. Sa longueur est diminuée au juste nécessaire pour gagner de la masse et pour éviter des problèmes de montablité. La mise en butée axiale est assurée par l'arbre 4 et l'anti rotation par crabotage. Elle se situe sur l'avant de la bague pour empêcher les problèmes de montabilité.

Le dispositif de distribution d'huile selon l'invention comprend le corps qui intègre donc les fonctions de la bague de distribution et de la piste de joint de la technique antérieure. La bague peut elle-même être considérée comme ayant plusieurs fonctions d'écopage de l'huile en sortie du gicleur, et de support et mise en position de ce palier. Le circuit d'huile intégré au corps a également deux fonctions de lubrification du palier et de refroidissement de la piste de joint.

La fabrication additive est une méthode particulièrement adaptée pour réaliser ce corps.

Les avantages majeurs de l'invention sont notamment le compactage du dispositif, la suppression de pièces, l'augmentation de l'efficacité du joint dynamique, et la diminution de la masse embarquée.

## Revendications

1. Dispositif de distribution d'huile d'un palier à roulement (8) pour une turbomachine d'aéronef, comportant :
- un palier à roulement (8) comportant deux bagues (12, 14), respectivement interne et externe,
- un corps (5) de distribution d'huile configurée pour être montée sur un arbre (4) de turbomachine, ce corps comportant :
i) une première surface cylindrique externe (5a) de montage de la bague interne (12) du palier,
ii) une écope annulaire (11) de récupération d'huile,
iii) une piste annulaire (26) d'un joint dynamique (22),
iv) un circuit (7) de lubrification dudit palier et de refroidissement de la piste, ce circuit étant formé dans le corps,
**caractérisé en ce que** l'écope annulaire constitue une première écope (11a) qui alimente une première partie (7x) dudit circuit en vue du refroidissement de la piste, et **en ce que** le corps comprend une seconde écope annulaire (11b) de récupération d'huile qui alimente une seconde partie (7y) dudit circuit en vue de la lubrification du palier.

2. Dispositif selon la revendication 1, dans lequel la première écope (11a) a un diamètre inférieur à celui de la seconde écope (11b).

3. Dispositif selon la revendication 1 ou 2, dans lequel les écopes (11a, 11b) ont en section axiale une forme générale en L et comprennent chacune une partie cylindrique (11a1, 11b1) dont une extrémité est reliée à un rebord annulaire (11a2, 11b2), les parties cylindriques s'étendant l'une autour de l'autre et les rebords annulaires étant décalés axialement l'un par rapport à l'autre.

4. Dispositif selon l'une des revendications précédentes, dans lequel la première partie (7x) du circuit (7) comprend au moins un premier canal (7a) s'étendant dans le corps (5) entre la première écope (11a) et ladite piste (26).

5. Dispositif selon l'une des revendications précédentes, dans lequel la seconde partie (7y) du circuit (7) comprend au moins un second canal (7y1) s'étendant dans le corps (5) entre la seconde écope (11b) et des conduits (15) d'alimentation en huile du palier (8).

6. Dispositif selon l'ensemble des revendications 4 et 5, dans lequel la première partie (7x) comprend un second canal (7a) de forme annulaire et dans lequel sont situées des nervures longitudinales (7x1), et la seconde partie (7y) comprend des premiers canaux longitudinaux (7y1) indépendants et espacés autour d'un axe longitudinal (X) du corps (5).

7. Dispositif selon l'une des revendications précédentes, dans lequel les écopes (11a, 11b) sont formées d'une seule pièce avec le corps (5) et sa piste (26).

8. Dispositif selon l'une des revendications 1 à 6, dans lequel la première écope (11a) est formée d'une seule pièce avec ladite piste (26), la seconde écope (11b) étant portée par un écrou (16') vissé sur la première écope (11a) et prenant de préférence appui sur la bague interne (12) du palier (8).

9. Dispositif selon l'une des revendications précédentes, dans lequel ledit corps (5) comprend :
- des dents de crabot (13) configurées pour coopérer par engagement avec des dents de crabot complémentaires dudit arbre (4), et/ou
- une butée annulaire (5y) d'appui configurée pour coopérer par appui axial avec un épaulement cylindrique (4y) correspondant dudit arbre (4).

10. Turbomachine, en particulier d'aéronef, comportant au moins un dispositif selon l'une des revendications précédentes.

## Patentansprüche

1. Vorrichtung zur Verteilung von Öl aus einem Wälzlager (8) für ein Flugzeugturbotriebwerk, umfassend:
- ein Wälzlager (8), das zwei Ringe (12, 14), einen inneren bzw. einen äußeren, umfasst,
- einen Ölverteilungskörper (5), der konfiguriert ist, um auf einer Welle (4) eines Turbotriebwerks montiert zu werden, wobei dieser Körper umfasst:
i) eine erste zylindrische Außenfläche (5a) zur Montage des Innenrings (12) des Lagers,
ii) ein ringförmiges Schöpfgefäß (11) zur Ölrückgewinnung,
iii) eine ringförmige Bahn (26) einer dynamischen Dichtung (22),
iv) einen Kreislauf (7) zur Schmierung des Lagers und zur Abkühlung der Bahn, wobei dieser Kreislauf im Körper gebildet ist,
**dadurch gekennzeichnet, dass** das ringförmige Schöpfgefäß ein erstes Schöpfgefäß (11a) darstellt, das einen ersten Teil (7x) des Kreislaufs im Hinblick auf die Abkühlung der Bahn versorgt, und dadurch, dass der Körper ein zweites Schöpfgefäß (11b) zur Rückgewinnung von Öl umfasst, das einen zweiten Teil (7y) des Kreislaufs im Hinblick auf die Schmierung des Lagers versorgt.

2. Vorrichtung nach Anspruch 1, wobei das erste Schöpfgefäß (11 a) einen Durchmesser aufweist, der kleiner ist als jener des zweiten Schöpfgefäßes (11 b).

3. Vorrichtung nach Anspruch 1 oder 2, wobei die Schöpfgefäße (11a, 11 b) im axialen Querschnitt eine allgemeine L-förmige Form aufweisen und jeweils einen zylindrischen Teil (11 a1, 11 b1) umfassen, bei dem ein Ende mit einem ringförmigen Rand (11 a2, 11 b2) verbunden ist, wobei die zylindrischen Teile sich umeinander erstrecken und die ringförmigen Ränder in Bezug zueinander axial versetzt sind.

4. Vorrichtung nach einem der vorstehenden Ansprüche, wobei der erste Teil (7x) des Kreislaufs (7) mindestens einen ersten Kanal (7a) umfasst, der sich im Körper (5) zwischen dem ersten Schöpfgefäß (11 a) und der Bahn (26) erstreckt.

5. Vorrichtung nach einem der vorstehenden Ansprüche, wobei der zweite Teil (7y) des Kreislaufs (7) mindestens einen zweiten Kanal (7y1) umfasst, der sich im Körper (5) zwischen dem zweiten Schöpfgefäß (11 B) und den Ölzufuhrleitungen (15) des Lagers (8) erstreckt.

6. Vorrichtung nach alle Ansprüche 4 und 5, wobei der erste Teil (7x) einen zweiten Kanal (7a) umfasst, der ringförmig ist und in dem sich längslaufende Rippen (7x1) befinden, und der zweite Teil (7y) erste längslaufende Kanäle (7y1) umfasst, die unabhängig sind und um eine Längsachse (X) des Körpers (5) verteilt sind.

7. Vorrichtung nach einem der vorstehenden Ansprüche, wobei die Schöpfgefäße (11a, 11b) einstückig mit dem Körper (5) und seiner Bahn (26) gebildet sind.

8. Vorrichtung nach einem der Ansprüche 1 bis 6, wobei das erste Schöpfgefäß (11a) einstückig mit der Bahn (26) gebildet ist, wobei das zweite Schöpfgefäß (11b) von einer am ersten Schöpfgefäß (11 a) geschraubten Schraubenmutter (16') getragen wird und vorzugsweise auf dem Innenring (12) des Lagers (8) aufliegt.

9. Vorrichtung nach einem der vorstehenden Ansprüche, wobei der Körper (5) umfasst:
- Klauenzähne (13), die konfiguriert sind, um durch Eingriff mit zusätzlichen Klauenzähnen der Welle (4) zusammenzuwirken, und/oder
- einen ringförmigen Anschlagpuffer (5y), der konfiguriert sind, um durch axiales Aufliegen mit einer zylindrischen Schulter (4y), die der Welle (4) entspricht, zusammenzuwirken.

10. Turbotriebwerk, insbesondere eines Luftfahrzeugs, das mindestens eine Vorrichtung nach einem der vorstehenden Ansprüche umfasst.

## Claims

1. An oil distribution device of a rolling bearing (8) for an aircraft turbine engine, comprising :
- a rolling bearing (8) comprising two rings (12, 14), respectively internal and external,
- an oil distribution body (5) configured to be mounted on a turbine engine shaft (4), this body comprising :
i) a first external cylindrical surface (5a) for mounting the internal ring (12) of the bearing,
ii) an annular oil recovery scoop (11),
iii) an annular track (26) of a dynamic seal (22),
iv) a circuit (7) for lubricating said bearing and cooling the track, this circuit being formed in the body,
**characterized in that** the annular scoop constitutes a first scoop (11a) which supplies a first portion (7x) of said circuit for cooling the track, and **in that** the body comprises a second annular oil recovery scoop (11b) which supplies a second portion (7y) of said circuit for lubricating the bearing.

2. The device of claim 1, wherein the first scoop (11a) has a smaller diameter than the second scoop (11b).

3. The device according to claim 1 or 2, wherein the scoops (11a, 11b) are generally L-shaped in axial cross-section and each comprise a cylindrical portion (11a1, 11b1), one end of which is connected to an annular flange (11a2, 11b2), the cylindrical portions extending around each other and the annular flanges being axially offset from each other.

4. The device according to any of the preceding claims, wherein the first portion (7x) of the circuit (7) comprises at least a first channel (7a) extending in the body (5) between the first scoop (11a) and said track (26).

5. The device according to one of the preceding claims, wherein the second portion (7y) of the circuit (7) comprises at least one second channel (7y1) extending in the body (5) between the second scoop (11b) and ducts (15) for supplying oil to the bearing (8).

6. The device according to all of claims 4 and 5, wherein the first portion (7x) comprises a second channel (7a) of annular shape and in which longitudinal ribs (7x1) are located, and the second portion (7y) comprises independent first longitudinal channels (7y1) spaced around a longitudinal axis (X) of the body (5).

7. The device according to one of the preceding claims, wherein the scoops (11a, 11b) are formed in one piece with the body (5) and its track (26).

8. The device according to one of claims 1 to 6, wherein the first scoop (11a) is formed in one piece with said track (26), the second scoop (11b) being carried by a nut (16') screwed onto the first scoop (11a) and preferably bearing on the internal ring (12) of the bearing (8).

9. The device according to any of the preceding claims, wherein said body (5) comprises:
- claw teeth (13) configured to cooperatively engage with complementary claw teeth of said shaft (4), and/or
- an annular abutment (5y) configured to cooperate by axial abutment with a corresponding cylindrical shoulder (4y) of said shaft (4).

10. A turbine engine, in particular of an aircraft, comprising at least one device according to one of the preceding claims.
